**Europäisches Patentamt**

(19) **European Patent Office**

**Office européen des brevets**

(11) Veröffentlichungsnummer: **0 068 525**
A1

(12) # EUROPÄISCHE PATENTANMELDUNG

(21) Anmeldenummer: **82200575.7**

(22) Anmeldetag: **11.05.82**

(51) Int. Cl.³: **B 01 D 53/04**

(30) Priorität: **19.06.81 DE 3123981**

(43) Veröffentlichungstag der Anmeldung: **05.01.83**
**Patentblatt 83/1**

(84) Benannte Vertragsstaaten: **DE FR GB IT**

�$ Anmelder: **METALLGESELLSCHAFT AG,**
**Reuterweg 14 Postfach 3724, D-6000 Frankfurt/M.1 (DE)**

(72) Erfinder: **Bräuer, Hans, Werner, Dr., Dipl.-Chem.,**
**Wingertstrasse 15, D-6308 Butzbach-Griedel (DE)**

(74) Vertreter: **Fischer, Ernst, Dr., Reuterweg 14,**
**D-6000 Frankfurt am Main 1 (DE)**

(54) **Verfahren zum Entfernen von Verunreinigungen aus einem Aktivkohlefilter.**

㉗ Zum Regenerieren wird das mit Verunreinigungen mit einem Siedepunkt von mindestens 120°C beladene Aktivkohlefilter mit Wasserdampf behandelt. Die Aktivkohle befindet sich in einem Behälter, in den man den Wasserdampf unter Druck einleitet, dabei den Behälter auf 1,5 bis 10 bar bespannt und das Aktivkohlebett dadurch auf eine Temperatur von etwa 110 bis 180°C erhitzt. Zum Ausspülen der desorbierten Stoffe wird der Druck im Filterbehälter wieder abgesenkt. Das Be- und Entspannen des Filterbehälters kann mehrfach wiederholt werden.

EP 0 068 525 A1

## Verfahren zum Entfernen von Verunreinigungen aus einem Aktivkohlefilter

Die Erfindung betrifft ein Verfahren zum Entfernen von Verunreinigungen mit einem Siedepunkt von mindestens 120°C aus dem in einem Behälter angeordneten Aktivkohlebett eines Adsorptionsfilters, wobei Wasserdampf durch das Bett geleitet wird.

Es ist bekannt, die Regeneration der Aktivkohle mit Wasserdampf durchzuführen, der praktisch drucklos durch das Aktivkohlebett geleitet wird. Der Wasserdampf hat in der ersten Phase der Regenerierung die Aufgabe, das Temperaturniveau im Aktivkohlebett auf Kondensationstemperatur (100°C) anzuheben. Nach erfolgter Aufheizung des Aktivkohlebettes dient der Wasserdampf in der zweiten Phase der Regeneration fast ausschließlich als Transportgas zum Ausspülen der desorbierten Stoffe.

Da der Wasserdampf in den meisten Fällen unmittelbar vor Eintritt in den Aktivkohle-Adsorber von einem höheren Druck entspannt wird, kann durch die Überhitzungswärme des entspannten Wasserdampfes die Aktivkohleschicht noch etwas über die Kondensationstemperatur hinaus erwärmt werden. Diese Erwärmung erfolgt aber naturgemäß nicht gleichmäßig über die ganze Höhe der Aktivkohleschicht, sondern ist auf der Eintrittsseite wesentlich höher als auf der Austrittsseite des Wasserdampfs. In Strömungsrichtung des Dampfes können somit durchaus Temperaturunterschiede im Bett von über 20°C auftreten. Da normalerweise der Wasserdampf in Gegenrichtung zur vorherigen Beladerichtung durch das Aktivkohlebett geleitet wird, wird also an der Eintrittsseite der Verunreinigungen, wo die höher siedenden Stoffe abgeschieden werden, die niedrigste Temperatur erreicht.

2

0068525

Die Desorption von Verunreinigungen aus Aktivkohlefiltern
durch Spülen mit Wasserdampf bei erhöhtem Druck ist aus der
deutschen Patentschrift 545 193 ebenfalls bekannt. Bei diesem
Verfahren erfolgt die Spülung des Aktivkohlebettes z.B. im
Bereich von 2 bis 3 bar. Dieser Druck wird während der gesamten Dauer der Dampfspülung beibehalten. Ziel dieses Verfahrens ist es, die aufzuwendende Menge an Spüldampf gegenüber
der Spülung bei normalem Druck herabzusetzen. Dies ist aber
nur der Fall, wenn der Dampfdruck des zu desorbierenden
Stoffes stärker mit steigender Temperatur ansteigt als der
Dampfdruck des Wassers. Im umgekehrten Fall tritt sogar eine
Verschlechterung der Desorptionswirkung ein. Überraschend
wurde nun gefunden, daß die Desorption höher siedender Verbindungen wesentlich verbessert und darüber hinaus die Menge
des Wasserdampfes, die beim vorstehend genannten Verfahren
für die Reinigung des Aktivkohlebettes notwendig ist, in
jedem Fall verringert werden kann. Erfindungsgemäß geschieht
dies dadurch, daß man zunächst den Wasserdampf unter Druck in
den Filterbehälter einleitet, dabei den Behälter auf einen
Druck von 1,5 bis 10 bar bespannt und das Bett dadurch auf
eine Temperatur von etwa 110 bis 180°C erhitzt und danach
zum Ausspülen der desorbierten Stoffe den Druck im Filterbehälter wieder absenkt.

In der Aufheizphase wird die zu regenerierende Aktivkohleschicht durch den Wasserdampf als Wärmeträger auf das gewünschte Temperaturniveau gebracht, wobei das Aktivkohlebett
über die ganze Schichthöhe eine nahezu gleichmäßige, der
Kondensationstemperatur des Wasserdampfes bei dem herrschenden
Druck entsprechende Temperatur aufweist. Nach erfolgter Aufheizung des Bettes wird die eigentliche Desorption und Ausspülung der desorbierten Verunreinigungen, im allgemeinen
Lösemittel, unter wieder vermindertem Druck bis herunter zu
etwa 1 bar durchgeführt. In dieser Phase geht die Temperatur
des Bettes nur wenig zurück, da seine Masse und damit seine
Wärmekapazität groß ist und die Überhitzungswärme des Wasserdampfes zum Ausgleich der Wärmeverluste üblicherweise ausreicht. Durch das wesentlich erhöhte Temperaturniveau im Adsorber werden auch die höher siedenden Stoffe auf der Dampfaustrittsseite des Aktivkohlebettes schneller und vollständiger desorbiert, wobei die Desorptionszeit optimal kurz gehalten werden kann.

Bevorzugte Verfahrensvarianten ergeben sich aus den Unteransprüchen.

Falls erforderlich, kann auch während der Ausspülphase durch kurzzeitige Drucksteigerung im Aktivkohlebett die Temperatur wieder auf das ursprünglich höhere Niveau angehoben werden. Eine erneute Entspannung schließt sich auch in diesem Fall an. Dieser Vorgang kann mehrfach wiederholt werden.

Das Verfahren eignet sich besonders zum Reinigen von Aktivkohlefiltern mit Wasserdampf, den man entgegengesetzt zur Adsorptionsrichtung durch das Aktivkohlebett leitet. Zumeist wird der Filterbehälter in der Aufheizungsphase auf einen Druck von etwa 2 bis 6 bar gebracht, wobei das Aktivkohlebett auf mindestens 120°C erhitzt wird. Den gewünschten höheren Druck im Filter kann man in bekannter Weise herstellen, z.B. dadurch, daß man in die Austrittsleitung des Wasserdampfes hinter dem Filter einen regelbaren Strömungswiderstand wie etwa ein Reduzierventil, eine Drosselscheibe oder eine Düse einbaut. Zur Entspannung wird der regelbare Strömungswiderstand in geeigneter Weise verringert und z.B. ein zu diesem Zweck vorhandenes Ventil geöffnet.

B e i s p i e l :

In einer großtechnischen Aktivkohleanlage für 90 000 m³ Abluft pro Stunde und einer Aktivkohlemenge von 40 t zur Abscheidung von Lösemitteln mit einem Siedepunkt zwischen 105 und 260°C (ca. 95% der Lösemittelmenge hatte einen Siedepunkt von mindestens 120°C) wurde das erfindungsgemäße Regenerierverfahren angewandt. Wasserdampf stand mit einem Druck von 6 bar und einer Temperatur von 170°C zur Verfügung.

4

Nach der Beladung wurde die Aktivkohleschicht zum Regenerieren mit Wasserdampf bei einem Druck im Adsorber von 4 bar auf die Kondensationstemperatur des Wasserdampfes von 140°C aufgeheizt. Während der folgenden vierstündigen Ausspülphase bei einem bis auf 2 bar verringerten Druck wurde der Druck im Adsorber insgesamt viermal kurzzeitig wieder auf 4 bar angehoben, um den Temperaturabfall innerhalb der Aktivkohleschicht infolge der verbrauchten Desorptionswärme und durch Wärmeverluste auszugleichen.

Die Temperatur im unteren Teil der Aktivkohleschicht, also auf der Dampfaustrittsseite, stieg im Verlauf der Regeneration durch die fühlbare Wärme des Wasserdampfs bis auf über 150°C an und lag im Mittel höher als 140°C. Der Temperaturgradient innerhalb des Bettes betrug im Mittel 5°C. Zum Vergleich wurde in der Anlage des Beispiels die Regeneration der Aktivkohle bei einem durchgehend konstanten Druck von 2 bar und mit der gleichen Wasserdampfmenge durchgeführt. Der Maximalwert der Temperatur in dem unteren Teil der Aktivkohleschicht (Dampfaustrittsseite) lag bei 125°C und der Temperaturgradient innerhalb der Schicht betrug 20 - 22°C.

Die Menge des desorbieten Lösemittels lag bei dem erfindungsgemäßen Regenerationsverfahren 12% höher und der Anteil an höher siedenden Komponenten im Desorbat war erwartungsgemäß deutlich größer als im Vergleichsversuch.

Nach Abschluß der vergleichsweise durchgeführten Desorption wurde wieder auf das erfindungsgemäße Desorptionsverfahren umgeschaltet und dadurch das Aktivkohlebett bis auf 150°C erhitzt. Dadurch stieg die Menge des pro Zeiteinheit anfallenden Desorbats um ca. 40% an.

## Patentansprüche

1) Verfahren zum Entfernen von Verunreinigungen mit einem Siedepunkt von mindestens 120°C aus dem in einem Behälter angeordneten Aktivkohlebett eines Adsorptionsfilters, wobei Wasserdampf durch das Bett geleutet wird, dadurch gekennzeichnet, daß man zunächst den Wasserdampf unter Druck in den Behälter einleitet, dabei den Behälter auf einen Druck von 1,5 bis 10 bar bespannt und das Bett dadurch auf eine Temperatur von etwa 110 bis 180°C erhitzt und danach zum Ausspülen der desorbierten Stoffe den Druck im Filterbehälter wieder absenkt.

2) Verfahren nach Anspruch 1, dadurch gekennzeichnet, daß der Wasserdampf entgegengesetzt zur Adsorptionsrichtung durch das Aktivkohlebett strömt.

3) Verfahran nach Anspruch 1 und 2, dadurch gekennzeichnet, daß der Filterbehälter auf einen Druck von etwa 1 bar entspannt wird.

4) Verfahren nach Anspruch 1 und 2, dadurch gekennzeichnet, daß der Filterbehälter durch den Wasserdampf auf einen Druck von etwa 2 bis 6 bar bespannt wird.

5) Verfahren nach Anspruch 1 bis 4, dadurch gekennzeichnet, daß nach der Druckabsenkung die Temperatur des Aktivkohle-bettes 10 bis 50°C über der diesem Druck entsprechenden Wasserdampfkondensationstemperatur liegt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | DE-C- 545 193 (METALLGESELLSCHAFT) --- | | B 01 D 53/04 |
| A | DE-C- 693 327 (METALLGESELLSCHAFT) --- | | |
| A | DE-C- 969 123 (LABORATORIUM FÜR ADSORBTIONSTECHNIK) --- | | |
| A | FR-A-1 417 532 (PINTSCH BAMAG) --- | | |
| A | DE-A-2 021 670 (AIR LIQUIDE S.A.) --- | | |
| A | ULLMANNS ENZYCLOPÄDIE DER TECHNISCHEN CHEMIE, 4. Auflage, 1972, Band 2, Verlag Chemie, Seiten 610-614 ----- | | **RECHERCHIERTE SACHGEBIETE (Int. Cl. ³)**<br><br>B 01 D 53/00 |

Der vorliegende Recherchenbericht wurde für alle Patentansprüche erstellt.

| Recherchenort | Abschlußdatum der Recherche | Prüfer |
|---|---|---|
| DEN HAAG | 09-09-1982 | HOFER H.R.P. |